# EUROPÄISCHE PATENTSCHRIFT

(11) **EP 1 318 243 B1**
(45) Veröffentlichungstag und Bekanntmachung des Hinweises auf die Patenterteilung: **20.10.2004**
(21) Anmeldenummer: 02026062.6
(22) Anmeldetag: 22.11.2002
(51) Int. Cl.: E03C 1/04, E03C 1/042, E03B 7/07, E03D 1/012, G01F 15/18, G01F 15/14

(54) **Einheit bestehend aus einer Unterputz-Sanitärarmatur und einer Vorrichtung zur Montage der Unterputz-Sanitärarmatur**
Unit consisting of a flush-mountable sanitary fitting and a device for mounting the flush-mountable sanitary fitting
Unité consistant en une armature sanitaire encastrable et en un dispositif pour le montage de cette armature

(30) Priorität: 04.12.2001 DE 10159448
(43) Veröffentlichungstag der Anmeldung: 11.06.2003
(73) Patentinhaber: Minol International GmbH & Co. KG, 70186 Stuttgart (DE)
(72) Erfinder: Lehmann, Werner, 70186 Stuttgart (DE)
(74) Vertreter: Dreiss, Fuhlendorf, Steimle & Becker

(56) Entgegenhaltungen:
- EP-A- 0 863 265
- EP-A- 0 964 105
- EP-A- 1 006 244
- DE-A- 3 826 064
- GB-A- 2 283 767

## Beschreibung

Die Erfindung betrifft eine Einheit bestehend aus einer Unterputz-Sanitärarmatur und einer Vorrichtung zur Montage der Unterputz-Sanitärarmatur, insbesondere von Unterputz-Zählergehäusen und/oder Unterputz-Absperreinrichtungen, für eine Sanitärinstallation im Gebäudebau, wobei die Vorrichtung eine Haltevorrichtung für die Unterputz-Sanitärarmatur sowie Befestigungselemente zum Festlegen der Haltevorrichtung an einer Gebäudewand oder an einem sonstigen ortsfesten Gegenstand des Gebäudes umfaßt.

Wenn vorstehend von Unterputz-Sanitärarmaturen die Rede ist, so werden hierunter regelmäßig Unterputz-Mess- oder -Steuervorrichtungen verstanden, also beispielsweise Durchflusszähler für Wasser oder Gas, die üblicherweise aus einem Unterputz-Zählergehäuse mit einem darin lösbar einsetzbaren Messeinsatz bestehen, oder Unterputz-Absperreinrichtungen in Form von Ventilen oder Ventilgehäusen die für die Reparatur oder Wartung, also den Austausch von Messeinsätzen, geschlossen werden und in der Regel den Messvorrichtungen in Strömungsrichtung vorgeordnet sind.

Bei der Sanitärinstallation besteht regelmäßig die Aufgabe, zwei Zählergehäuse mit jeweiligen Absperreinrichtungen für Warm- und Kaltwasser führende Leitungen, die üblicherweise nebeneinander verlegt werden, in wohldefiniertem Abstand zueinander sowie zu einer Gebäudewand anzuordnen und bezüglich der Gebäudewand zu fixieren. Dies geschieht im unverputzten Zustand an der Gebäudewand. Die mit der Verrohrung verbundenen Unterputz-Sanitärarmaturen werden danach bis auf eine Zugangsöffnung zum Einsetzen des Messeinsatzes oder zum Auf- bzw. Einschrauben eines Ventileinsatzes vorzugsweise flächenbündig eingeputzt und können beispielsweise von einer Dekorationsrosette umgeben werden. Aber auch die Anordnung nur eines Zählergehäuses mit einer Absperreinrichtung ist denkbar.

Da es schwierig ist, die Unterputz-Sanitärarmaturen wie vorstehend beschrieben exakt horizontal oder vertikal zueinander auszurichten und anzuordnen, wurde bereits eine gehäuse- oder schrankartige Haltevorrichtung vorgeschlagen, welche an der unverputzten Gebäudewand montiert wird und darin vormontierte Sanitärarmaturen aufweist. Die Handhabung dieser schrankartigen Haltevorrichtung ist aufwendig; sie ist voluminös und teuer und daher nicht wirtschaftlich einsetzbar.

Mit DE 197 08 921 A1 und DE 298 04 700 U wurde eine kompakte Haltevorrichtung vorgeschlagen, bei der die Sanitärarmaturen gegen eine metallische Halteplatte fixiert werden, die ihrerseits an einer Gebäudewand festschraubbar ist.

Mit EP 0 853 753 B1 wurde vorgeschlagen, eine Unterputz-Sanitärarmatur mit einem feuchtigkeitsabweisenden Hartschaum einer hohen Dichte zu umschäumen, die dann eine massive blockartige Halterung für die Unterputz-Sanitärarmatur bildet, die auch geeignet sein soll, den beim Anschließen der Verrohrung ausgeübten Drehmomenten standzuhalten und die umschäumten Teile in genauer Ausrichtung zueinander dauerhaft zu halten.

Um dies mittels eines Hartschaums zu erreichen, muss der hierdurch gebildete Block sehr voluminös ausgebildet werden, d.h. er muss die umschäumten Teile in Tiefenrichtung, aber auch in Breiten- und Längenrichtung mit großen Abmaßen umgeben, damit die Stabilitätsfunktion hinreichend gegeben ist. Dies macht die geschäumte Haltevorrichtung voluminös, schwer und dazu teuer. Auch die Halteelemente, die in Form von Haltelaschen ausgebildet sein können, müssen sich vorzugsweise durch eine gesamte Abmessung des geschäumten Blocks erstrecken, um die Haltekräfte zerstörungsfrei in den Block einleiten zu können.

Mit EP 0 863 265-A wurde vorgeschlagen, eine Meßvorrichtung mit einer Steuervorrichtung einstückig auszubilden.

Hiervon ausgehend liegt der vorliegenden Erfindung die Aufgabe zugrunde, eine Einheit bestehend aus einer Unterputz-Sanitärarmatur und einer Haltevorrichtung zur Montage der Unterputz-Sanitärarmatur zu schaffen, die ein geringeres Gewicht aufweist und kostengünstiger herstellbar ist und die es erlaubt, geringere Abmessungen der Haltevorrichtung samt Sanitärarmatur zu erreichen.

Diese Aufgabe wird bei einer gattungsgemäßen Einheit erfindungsgemäß dadurch gelöst, dass deren Haltevorrichtung ein Kunststoff-Spritzteil ist und die Unterputz-Sanitärarmatur in die Haltevorrichtung miteingespritzt und damit unverlierbar in der Haltevorrichtung aufgenommen ist und dass die Haltevorrichtung mit Wandstärken von 1 bis 7 mm, vorzugsweise von 1 bis 5 mm, ausgebildet ist.

Mit der Erfindung wurde erkannt, dass es möglich ist, anstelle einer massiven Ausbildung der Haltevorrichtung mittels eines Hartschaums hoher Dichte eine eher filigrane Ausbildung der Haltevorrichtung als Kunststoff-Spritzteil vorzunehmen. Hierdurch wird eine sehr stabile Fixierung der eingespritzt Unterputz-Sanitärarmaturen in exakter Ausrichtung zueinander erreicht, die sehr kostengünstig herstellbar ist, da geringe Mengen an spritzbarem Kunststoffmaterial benötigt werden, um die Unterputz-Sanitärarmaturen mit hinreichender Festigkeit und Stabilität zu halten, an einer Gebäudewand anzuordnen und im verputzten Zustand betreiben zu können.

Es erweist sich dabei als vorteilhaft, wenn die gespritzte Haltevorrichtung eine rippenbildende oder verrippte Struktur aufweist, um die Verwindungsstabilität, aber auch die Gesamtstabilität der Haltevorrichtung zu erhöhen. Auch bei geringen Wandstärken von 1 bis 5 mm, insbesondere 1 bis 3 mm, lassen sich den Anforderungen genügende Festigkeiten problemlos erreichen. Es hat sich des weiteren gezeigt, dass es möglich ist, äußere die Sichtseiten bildende Wandungen mit einer Stärke von wenigstens 2 mm, insbesondere von wenigstens 3 mm auszubilden und innerhalb rippenförmige Wandungen zwischen 1 und 2 mm bzw. 1 und 3 mm, also mit geringerer Wandstärke als die äußeren Wandungen, vorzusehen. Auch auf diese Weise kann je nach Anzahl der rippenförmigen Wandungen eine an sich beliebige Festigkeit erreicht werden, ohne dass das Gewicht der Haltevorrichtung wesentlich erhöht wird. Die rippenförmigen Wandungen können beispielsweise quader- oder würfelförmige Bereiche umschließend, also in der Draufsicht auf ihre Stirnkanten gitterförmig angeordnet sein. Hierbei kann ihr Abstand vorteilhafterweise zwischen 10 und 80 mm, insbesondere zwischen 20 und 70 mm oder zwischen 20 und 60 mm und vorzugsweise zwischen 30 und 55 mm betragen.

Insgesamt erweist es sich als vorteilhaft, wenn die Haltevorrichtung ein im wesentlichen quaderförmiges Gehäusebauteil bildet und vorzugsweise eine ebene Anlageseite aufweist, mit der die Haltevorrichtung dann plan an eine Gebäudewand oder an Abstandshalter oder dergleichen zur Montage angelegt werden kann.

Es ist eine Vielzahl von spritzbaren Kunststoffen bekannt, die sich für den vorstehend beschriebenen Einsatzzweck eignen. Ein bevorzugter Kunststoff zur Herstellung der Haltevorrichtung ist indessen Acrylnitril-Butadien-Styrol (ABS) nach DIN 16890 oder Polypropylen nach DIN 8078 oder Polyethylen hoher Dichte (PE-HD) nach DIN 8075 und DIN 19535. Diese Stoffe zeichnen sich des weiteren in vorteilhafter Weise dadurch aus, dass eine Haltevorrichtung geschaffen werden kann, die der Brandschutznorm 4102 Klasse B2 entsprechen und als selbstverlöschend gelten. Auch eine Fertigung unter Verwendung des Kunststoffs ABS Klasse 5AV ist denkbar, was dann die Brandschutznorm 4102 Klasse B1 erfüllen würde, die schwer entflammbare und bei Wegnahme der Zündquelle nach kurzer Zeit verlöschende Baustoffe umfasst.

In weiterer Ausbildung der Erfindung ist die Haltevorrichtung auf ihrer von der Sicht- oder Bedienseite der Sanitärarmatur abgewandten Rückseite offen ausgebildet und bildet bis auf ihre Wandungen ein materialfreies Volumen. Diese offene Rückseite kann dann zusätzlich erwünschtenfalls von einem Deckelteil abgedeckt werden.

In Weiterbildung der Erfindung von besonderer Bedeutung ist das materialfreie Volumen bzw. die Anordnung und Ausbildung der Wandungen der Haltevorrichtung derart, dass sie von der Rückseite her in Tiefenrichtung hinterschneidungsfrei ausgebildet ist. Dabei wird die Tiefenrichtung als diejenige Richtung verstanden, die im wesentlichen senkrecht zur Gebäudewand bzw. zur später herzustellenden Oberfläche des Putzes verläuft. Dies eröffnet nämlich die Möglichkeit, in das materialfreie Volumen der Haltevorrichtung von der Rückseite her ein Füllteil einzusetzen, welches das materialfreie Volumen vorzugsweise im wesentlichen ausfüllt. Dieses Füllteil kann vorteilhafterweise aus schwingungsabsorbierendem Material, wie beispielsweise Styropor, bestehen, welches als Styropor V0 ebenfalls als selbstverlöschend angesehen werden kann.

Dieses Füllteil entspricht dann vorteilhafterweise in der gesamten Tiefenrichtung des materialfreien Volumens dem dreidimensionalen Negativbild der Struktur der spritzgegossenen Haltevorrichtung. Das Füllteil kann an sich ein von einem Deckelteil verschiedenes Bauteil darstellen, wobei es vorteilhafterweise mit dem Deckelteil unlösbar verbunden ist, oder es kann zugleich selbst das Deckelteil bilden.

Die eingangs genannten Befestigungselemente zum Festlegen der Vorrichtung an einer Gebäudewand könnten in vorgefertigte Gewindeöffnungen oder gewindelose Einschraub- oder Einstecköffnungen eingeschraubt, eingeklebt oder eingepresst werden. Demgegenüber erweist es sich als vorteilhaft, wenn die Befestigungselemente zusammen mit der Sanitärarmatur(en) in die Haltevorrichtung mit eingespritzt sind. Es erweist sich dabei als vorteilhaft, wenn die Befestigungselemente, die beispielsweise von Gewindebolzen gebildet sein können, in einen lokal verstärkten Bereich der Haltevorrichtung eingespritzt sind. Dieser lokal verstärkte Bereich kann dann auch eine Wandstärke von, je nach Stärke der Gewindebolzen, mehr als 7 mm aufweisen. Es handelt sich hierbei aber wie gesagt nur um einen lokalen Bereich des Kunststoff-Spritzteils, vorzugsweise um einen Eckbereich des Kunststoff-Spritzteils, in dem die eingangs genannten Wandstärken von 1 bis 7 mm möglicherweise überschritten werden. Dieser Bereich liegt im Vergleich zum Gesamtvolumen des Kunststoff-Spritzteils (Außenmaße) unter 10 %, insbesondere unterhalb von 7 %, und vorzugsweise unterhalb von 5 % in seiner volumenmäßigen Erstreckung.

Nach einer ganz besonders bevorzugten Variante sind die Befestigungselemente jeweils von einem V-förmig abgewinkelten Gewindebolzen gebildet, die so in einem jeweiligen Eckbereich der Haltevorrichtung angeordnet sind, dass ihre Schenkel über zwei in dem Eckbereich aufeinander stoßende Schmal- oder Sichtseiten der Haltevorrichtung nach außen vorstehen. Dieser Überstand beträgt vorzugsweise 5 bis 20, insbesondere 10 bis 18 mm.

Nach einem weiteren Erfindungsgedanken sind ein Zählergehäuse und ein Ventilgehäuse einstückig miteinander ausgebildet, wobei sie entweder aus einem einstückig warmgepressten Gehäuserohling hergestellt sind oder miteinander hartverlötet sein können, so wie in DE 197 08 920 A1 beschrieben. Hierdurch kann auf einen langgestreckten Rohrabschnitt zur Verbindung der beiden Gehäuseteile verzichtet werden, so dass der Abstand der jeweiligen in Tiefenrichtung verlaufenden Längsmittelachse von Zählergehäuse bzw. Ventilgehäuse sehr gering ist. Er kann beispielsweise zwischen 7 und 10 cm, insbesondere zwischen 7 und 9 cm, und vorzugsweise weniger als 8,5 cm betragen. Auf diese Weise ist es möglich, dass die Haltevorrichtung eine Außenabmessung (ohne eventuell vorstehende Befestigungselemente) in Strömungsrichtung, d. h. in Richtung der Anordnung von Zählergehäuse und Ventilgehäuse von höchstens 180 mm, insbesondere von höchstens 160 mm und vorzugsweise von höchstens 150 mm aufweisen. Eine bestmögliche Außenabmessung bei Zählergehäusen mit einem Außendurchmesser von 80 mm liegt bei 140 mm.

Des weiteren erweist es sich unabhängig von einer einstückigen Ausbildung von Zählergehäuse und Ventilgehäuse als vorteilhaft, dass die erfindungsgemäße Haltevorrichtung eine Außenabmessung in Tiefenrichtung von höchstens 60 mm, insbesondere von höchstens 50 mm und optimalerweise von 45 mm aufweisen kann, und zwar im Besonderen bei Zählergehäusen mit 80 mm Außendurchmesser.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Montagevorrichtung. In der Zeichnung zeigt:
- Figur 1: eine perspektivische Ansicht einer erfindungsgemäßen Montagevorrichtung mit Unterputz-Sanitärarmaturen;
- Figur 2: eine Draufsicht auf die Bedienseite der Montagevorrichtung nach Figur 1;
- Figur 3: eine Frontansicht der Montagevorrichtung nach Figur 2;
- Figur 4: eine Ansicht der Rückseite der Montagevorrichtung in Richtung des Pfeils A in Figur 3;
- Figur 5: eine Schnittansicht mit gestuft verlaufender Schnittebene B-B nach Figur 2;
- Figur 6: eine Schnittansicht mit Schnittebene C-C nach Figur 4;
- Figur 7: eine Schnittansicht mit Schnittebene D-D nach Figur 4;
- Figur 8: eine Schnittansicht durch einen Eckbereich mit Schnittebene G-G nach Figur 3;
- Figur 9: eine perspektivische Ansicht eines Füllteils;
- Figur 10: eine Draufsicht auf das Füllteil nach Figur 9;
- Figur 11: eine Seitenansicht des Füllteils nach Figur 10;
- Figur 12: eine Schnittansicht mit gestuft verlaufender Schnittebene A-A nach Figur 10 und
- Figur 13: eine Schnittansicht mit Schnittebene B-B nach Figur 10.

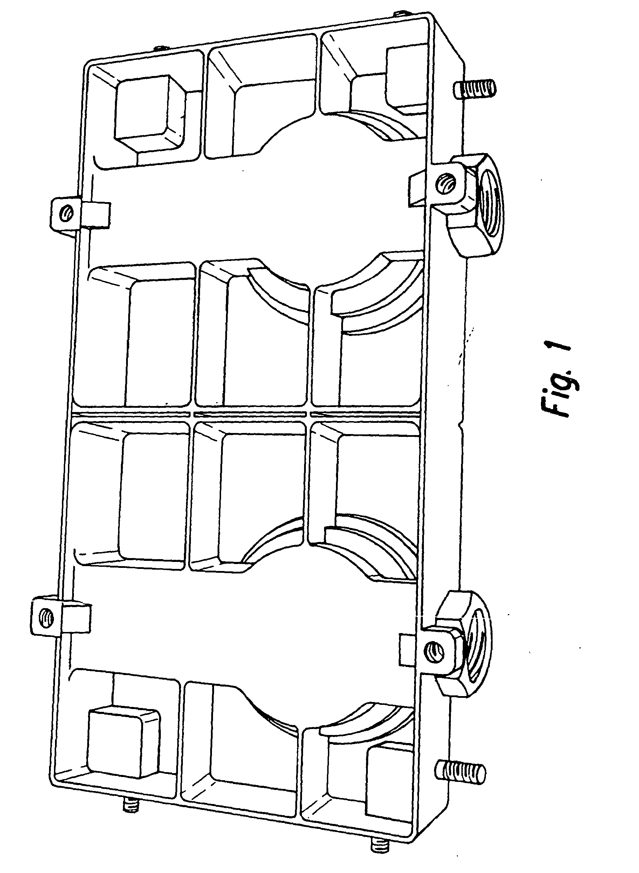

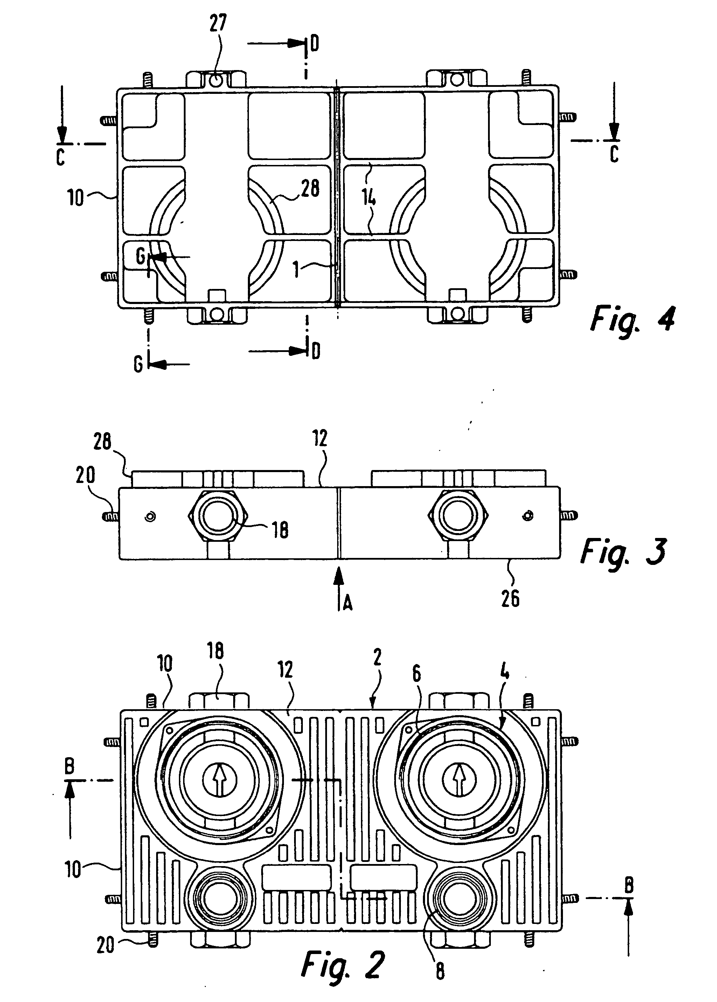

Die Figuren 1 bis 8 zeigen verschiedene Ansichten und Schnittansichten einer erfindungsgemäßen Haltevorrichtung 2 für Unterputz-Sanitärarmaturen 4 in Form eines Unterputz-Zählergehäuses 6 im folgenden als Zählergehaüse 6 bezeichnet für die Aufnahme eines nicht dargestellten Messeinsatzes und eines Unterputz-Ventilgehäuses 8 im folgenden als Ventilgehäuse 8 bezeichnet einer Absperreinrichtung. Figur 2 zeigt eine Draufsicht auf die quaderförmige Haltevorrichtung mit Zählergehäuse 6 und Ventilgehäuse 8. Zählergehäuse 6 und Ventilgehäuse 8 wurden in ein Spritzwerkzeug eingelegt und es wurde sodann die Haltevorrichtung 2 als einstückiges Kunststoff-Spritzteil aus vorzugsweise ABS V0 hergestellt. Wie sich den weiteren Ansichten und Schnittdarstellungen entnehmen lässt, weist die Haltevorrichtung 2 eine filigrane Struktur auf. Sie umfasst die Sichtseiten des quaderförmigen Bauteils bildende Wandungen 10 mit einer Wandstärke von vorzugsweise 2 bis 5, insbesondere ca. 3 mm. Eine obere Wandung 12, welche die Sichtseite nach Figur 1 bildet, weist eine geringfügig geringere Wandstärke auf als die Wandungen 10.

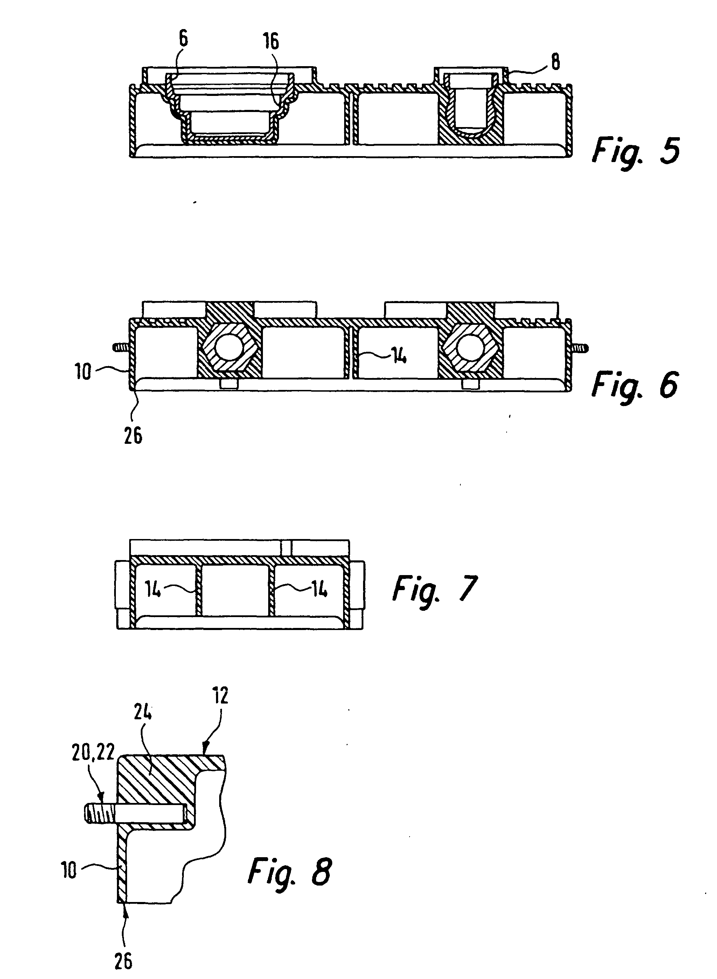

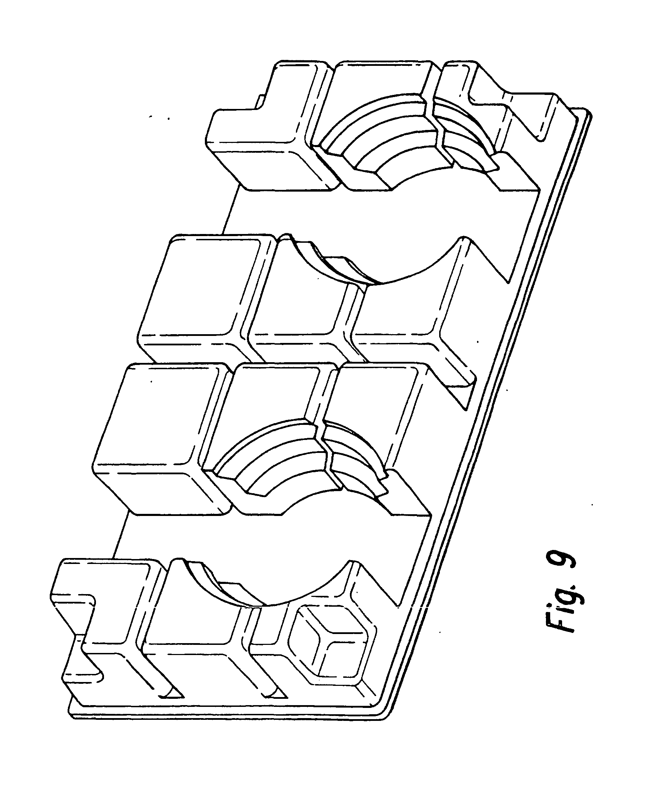

Wie sich insbesondere aus Figuren 4, 6 und 7 ersehen lässt, verlaufen im Inneren in Tiefenrichtung erstreckte rippenartige Wandbereiche 14, deren Wandstärke vorzugsweise geringfügig geringer ist als die Wandstärke der die Sichtseiten bildenden Wandungen 10 und 12 und vorzugsweise 1 bis 2 mm beträgt. In der Mitte lässt sich die Haltevorrichtung 2 in zwei Teile trennen, etwa durch Sägen, so dass zwei Einzelbauteile beispielsweise für eine Einzelstrangmontage (z. B. nur Kaltwasser) erhalten werden.

Die aus Figur 2 ersichtliche Strukturierung der Oberseite der Wandung 12 ist auf eine Oberflächenprofilierung einer Tiefe von nur 1 mm zurückzuführen.

Die Struktur der Haltevorrichtung 2 im Bereich des Zählergehäuses 6 und des Ventilgehäuses 8 ist aus den Schnittansichten der Figuren 5 und 6 zu ersehen. Man erkennt einen topfförmigen Bereich 16 der Haltevorrichtung 2, mit dem diese das Zählergehäuse 6 unmittelbar, d. h. spaltfrei, umgibt und somit hält. In entsprechender Weise ist aus dem rechten Teil der Figur 4 und aus Figur 5 die Umspritzung des Ventilgehäuses 8 zu ersehen.

Man erkennt aus den Figuren ferner, dass sich die Unterputz-Sanitärarmaturen mit einem Gewindeanschluss 18 über die jeweilige äußere Begrenzung der Haltevorrichtung 2 nach außen erstrecken, um dort mit einer Verrohrung verbunden zu werden. Die in den Zeichnungen dargestellte und vorstehende beschriebene Herstellung der Haltevorrichtung als Kunststoff-Spritzteil ist geeignet und hinreichend, um die beim Verschrauben mit der Verrohrung auftretenden Drehmomente aufzunehmen und auch während des Betriebs die Unterputz-Sanitärarmaturen sicher zu halten.

Wie der Blick auf die Rückseite nach Figur 4 und die Schnittdarstellungen nach Figuren 5 bis 7 zeigen, umschließen oder begrenzen die dünnen Wandungen ein zum größten Teil materialfreies Volumen. Auf diese Weise wird das Gesamtgewicht und der Materialeinsatz zur Herstellung der Haltevorrichtung minimiert.

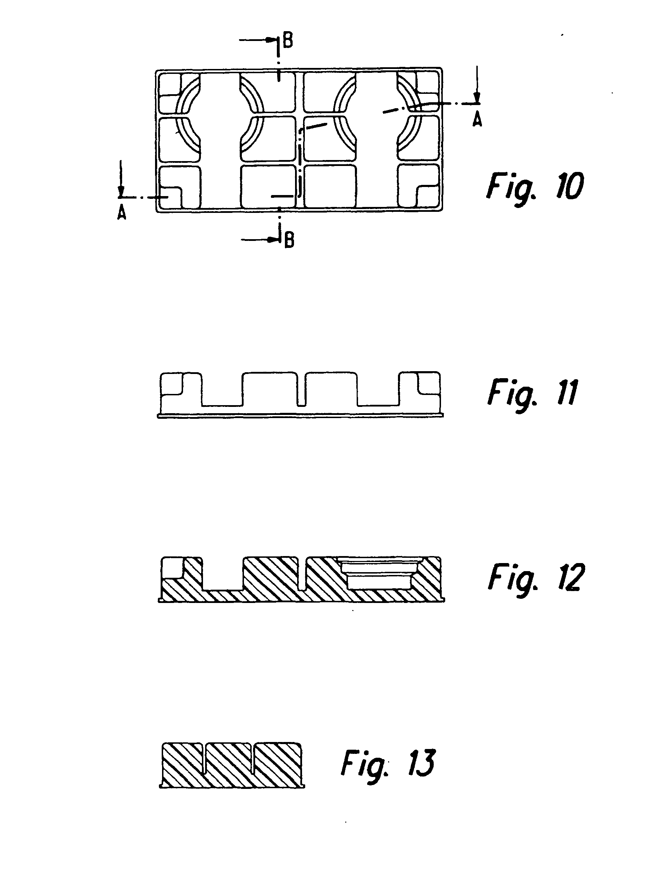

Aus der Schnittansicht nach Figur 8 ist die Anordnung von Halteelementen 20 in Form eines rechtwinklig abgewinkelten Gewindebolzens 22, von dem aufgrund der Lage der Schnittebene nur ein Schenkel sichtbar ist, dargestellt. Der Gewindebolzen 20 ist in einen lokal verstärkten Bereich 24 der Haltevorrichtung 2 miteingespritzt und erstreckt sich über die seitlichen Sichtseiten der Haltevorrichtung 2 hervor.

Die Wandungen 10 laufen in einen frei endenden Rand 26 aus, der eine ebene Anlagefläche bildet.

Ferner erkennt man aus den Figuren 1 und 2 Gewindeöffnungen 27, die an Messing-Gewindeanschlüsse 18 des Zählergehäuses 6 und des Ventilgehäuses 8 radial angeformt sind, und beispielsweise zur Befestigung eines Deckels dienen können oder dazu dienen können, die gesamte Montagevorrichtung, also die Haltevorrichtung mit eingespritzter Sanitärarmatur, an eine zusätzliche Montageplatte oder dergleichen festzuschrauben.

Aus den Figuren ist ferner von der Wandung 12 vorstehend ein teilringförmiger Flanschabschnitt 28 ersichtlich, dem jedoch keine Haltefunktion, sondern allenfalls eine Funktion beim Einputzen der Haltevorrichtung zukommt. Dieser Flansch 28 umgibt dann konzentrisch an sich bekannte Aufschraubhülsen, welche auf ein Außengewinde des Zählergehäuses 6 bzw. des Ventilgehäuses 8 aufschraubbar sind, um zu verhindern, dass Putz und Mörtel in die Gehäuse eintritt.

Die Figuren 9 bis 13 zeigen in verschiedenen Ansichten und Schnittansichten ein Füllteil 30, welches komplementär zur inneren Formgebung der Haltevorrichtung 2 ausgebildet ist und von dessen Rückseite her in Tiefenrichtung in die Haltevorrichtung 2 einsetzbar ist. Dieses Füllteil 30 ist vorzugsweise aus Styropor V0 hergestellt. Es bildet einen Einsatz und zugleich eine deckelartige Rückseite des filigran hergestellten und zur Rückseite hin offenen Kunststoff-Spritzteils, welches den Grundkörper der Haltevorrichtung 2 bildet. Wie sich besonders gut der perspektivischen Darstellung nach Figur 9 entnehmen lässt, ist das Füllteil 30 überall dort massiv bzw. volumenerfüllt ausgebildet, wo das Kunststoff-Spritzteil volumenfrei ausgebildet ist und umgekehrt. Es ist also komplementär zur Rippenstruktur der Haltevorrichtung 2 ausgebildet. Man erkennt besonders gut den lokal verstärkten Bereich 24 der Haltevorrichtung bzw. die Lage der umspritzten Sanitärarmaturen.

Durch den Einsatz des Füllteils 30 lässt sich eine Wärmedämmung, aber auch in gewissem Maße ein Mittel zur Aufnahme von Schwingungen verwirklichen. Verstärkende oder tragende Funktion kommt dem Füllteil 30 hingegen nicht zu.

## Patentansprüche

1. Einheit bestehend aus einer Unterputz-Sanitärarmatur und einer Vorrichtung zur Montage der Unterputz-Sanitärarmatur für eine Sanitärinstallation im Gebäudebau, wobei die Vorrichtung eine Haltevorrichtung (2) für die Unterputz-Sanitärarmatur sowie gegebenenfalls Befestigungselemente (20) zum Festlegen der Haltevorrichtung an einer Gebäudewand oder an einem sonstigen ortsfesten Gegenstand des Gebäudes umfaßt,
**dadurch gekennzeichnet,**
**dass** die Haltevorrichtung (2) ein Kunststoff-Spritzteil ist und die Unterputz-Sanitärarmatur in die Haltevorrichtung (2) miteingespritzt und damit unverlierbar in der Haltevorrichtung aufgenommen ist und dass die Haltevorrichtung (2) mit Wandstärken von 1 - 7 mm ausgebildet ist.

2. Einheit nach Anspruch 1, **dadurch gekennzeichnet, dass** die Haltevorrichtung (2) eine rippenbildende Struktur aufweist.

3. Einheit nach Anspruch 1 oder 2, **dadurch gekennzeichnet, dass** die Haltevorrichtung (2) ein quaderförmiges Gehäusebauteil bildet.

4. Einheit nach Anspruch 1, 2 oder 3, **dadurch gekennzeichnet, dass** die Haltevorrichtung (2) eine ebene Anlageseite aufweist.

5. Einheit nach einem oder mehreren der vorstehenden Ansprüche, **dadurch gekennzeichnet, dass** die Haltevorrichtung (2) aus Acrylnitril-Butadien-Styrol ABS gespritzt ist.

6. Einheit nach einem oder mehreren der vorstehenden Ansprüche, **dadurch gekennzeichnet, dass** die Haltevorrichtung (2) einen topfförmigen Bereich (16) aufweist, indem ein Zählergehäuse (6) miteingespritzt und somit unverlierbar aufgenommen ist.

7. Einheit nach einem oder mehreren der vorstehenden Ansprüche, **dadurch gekennzeichnet, dass** die Haltevorrichtung (2) auf ihrer von der Sicht- oder Bedienseite der Unterputz-Sanitärarmatur abgewandten Rückseite offen ausgebildet ist und bis auf die Wandungen ein materialfreies Volumen bildet.

8. Einheit nach Anspruch 7, **dadurch gekennzeichnet, dass** die Rückseite der Haltevorrichtung (2) von einem Deckelteil abdeckbar ist.

9. Einheit nach Anspruch 7 oder 8, **dadurch gekennzeichnet, dass** das materialfreie Volumen von der Rückseite her in Tiefenrichtung hinterschneidungsfrei ausgebildet ist.

10. Einheit nach Anspruch 7, 8 oder 9, **dadurch gekennzeichnet, dass** in das materialfreie Volumen von der Rückseite her ein Füllteil (30) einsetzbar ist, welches das materialfreie Gehäuse vorzugsweise im wesentlichen ausfüllt.

11. Einheit nach Anspruch 10, **dadurch gekennzeichnet, dass** das Füllteil (30) Styropor umfasst.

12. Einheit nach Anspruch 10 oder 11, **dadurch gekennzeichnet, dass** das Füllteil (30) mit dem Deckelteil unlösbar verbunden ist oder zugleich das Deckelteil bildet.

13. Einheit nach einem oder mehreren der vorstehenden Ansprüche, **dadurch gekennzeichnet, dass** die Befestigungselemente (20) in die Haltevorrichtung (2) miteingespritzt sind.

14. Einheit nach Anspruch 13, **dadurch gekennzeichnet, dass** die Befestigungselemente (20) von Gewindebolzen (22) gebildet sind, die in einen lokal verstärkten Bereich (24) der Haltevorrichtung (2) eingespritzt sind.

15. Einheit nach einem oder mehreren der vorstehenden Ansprüche, **dadurch gekennzeichnet, dass** die Befestigungselemente (20) in einem Eckbereich der Haltevorrichtung (2) angeordnet sind.

16. Einheit nach einem oder mehreren der vorstehenden Ansprüche, **dadurch gekennzeichnet, dass** die Befestigungselemente (20) von einem V-förmig abgewinkelten Gewindebolzen (22) gebildet sind, dessen Schenkel über zwei Schmalseiten der Haltevorrichtung (2) nach außen vorstehen.

17. Einheit nach einem oder mehreren der vorstehenden Ansprüche, **dadurch gekennzeichnet, dass** die Unterputz-Sanitärarmatur ein Zählergehäuse (6) und eine Absperreinrichtung (8) umfasst, die einstückig miteinander verbunden sind.

18. Einheit nach einem oder mehreren der vorstehenden Ansprüche, **dadurch gekennzeichnet, dass** die Unterputz-Sanitärarmatur ein Zählergehäuse (6) und eine Absperreinrichtung (8) umfasst und die Haltevorrichtung (2) eine Außenabmessung in Strömungsrichtung von höchsten 180 mm, insbesondere von höchstens 160 mm und vorzugsweise von höchstens 150 mm aufweist.

19. Einheit nach einem oder mehreren der vorstehenden Ansprüche, **dadurch gekennzeichnet, dass** die Haltevorrichtung (2) eine Außenabmessung in Tiefenrichtung von höchstens 60 mm, insbesondere von höchstens 50 mm aufweist.

## Claims

1. A unit comprising a flush-mountable sanitary fitting and a device for mounting the flush-mountable sanitary fitting, for a sanitary installation in a building structure, the device including a support device (2) for the flush-mountable sanitary fitting and, if appropriate, attachment elements (20) for fixing the support device to a building wall or to another fixed building object, wherein the support device (2) is a plastic injection-molded part, and the flush-mountable sanitary fitting is injected into the support device (2) and is therefore accommodated in the support device in a non-detachable manner, and the support device (2) is configured as having wall thicknesses of 1-7 mm.

2. The unit as recited in Claim 1, wherein the support device (2) has a structure that is constituted by ribs.

3. The unit as recited in Claim 1 or 2, wherein the support device (2) is a rectangular housing part.

4. The unit as recited in Claim 1, 2, or 3, wherein the support device (2) has a planar contact side.

5. The unit as recited in one or more of the preceding claims, wherein the support device (2) is injected using acrylonitrile-butadiene styrene (ABS).

6. The unit as recited in one or more of the preceding claims, wherein the support device (2) has a pot-shaped area (16), into which a meter housing (6) is injected and therefore accommodated in a non-detachable manner.

7. The unit as recited in one or more of the preceding claims, wherein the support device (2) is configured so as to be open on its rear side facing away from the visible or operating side of the flush-mountable sanitary fitting, and it forms a space that is free of material up to the walls.

8. The unit as recited in Claim 7, wherein the rear side of the support device (2) can be covered by a cover part.

9. The unit as recited in Claim 7 or 8, wherein the material-free space is configured as having no undercuts in the depth direction from the rear side.

10. The unit as recited in Claim 7, 8, or 9, wherein a filler part (30) can be inserted from the rear side into the material-free space, the filler part preferably filling up the material-free housing to a great extent.

11. The unit as recited in Claim 10, wherein the filler part (30) includes styropor.

12. The unit as recited in Claim 10 or 11, wherein the filler part (30) is non-detachably joined to the cover part or at the same time constitutes the cover part.

13. The unit as recited in one or more of the preceding claims, wherein the attachment elements (20) are injected into the support device (2).

14. The unit as recited in Claim 13, wherein the attachment elements (20) are made up of threaded bolts (22), which are injected into a locally reinforced area (24) of the support device (2).

15. The unit as recited in one or more of the preceding claims, wherein the attachment elements (20) are disposed in a corner area of the support device (2).

16. The unit as recited in one or more of the preceding claims, wherein the attachment elements (20) are made up of threaded bolts (22) that are bent in a V-shape, the shank of the threaded bolt protruding to the outside through two narrow sides of the support device (2).

17. The unit as recited in one or more of the preceding claims, wherein the flush-mountable sanitary fitting includes a meter housing (6) and a shut-off device (8), which are integrally joined to each other.

18. The unit as recited in one or more of the preceding claims, wherein the flush-mountable sanitary fitting includes a meter housing (6) and shut-off device (8), and the support device (2) has an exterior dimension in the flow direction of a maximum of 180 mm, in particular a maximum of 160 mm, and preferably a maximum of 150 mm.

19. The unit as recited in one or more of the preceding claims, wherein the support device (2) has an exterior dimension in the depth direction of a maximum of 60 mm, in particular a maximum of 50 mm.

## Revendications

1. Unité formée par une robinetterie sanitaire à encastrer et un dispositif de montage de la robinetterie sanitaire à encastrer pour une installation sanitaire dans la construction de bâtiments, le dispositif comprenant un dispositif de support (2) pour la robinetterie sanitaire à encastrer, ainsi que, le cas échéant, des éléments de fixation (20) pour fixer le dispositif de support contre un mur du bâtiment ou contre un autre objet fixe du bâtiment, **caractérisée en ce que** le dispositif de support (2) est une pièce en matière plastique moulée par injection et la robinetterie sanitaire à encastrer est intégrée dans le dispositif de support (2) en étant moulée par injection avec celui-ci et est ainsi logée de manière imperdable dans le dispositif de support, et **en ce que** le dispositif de support (2) est conçu avec des parois de 1 à 7 mm d'épaisseur.

2. Unité selon la revendication 1, **caractérisée en ce que** le dispositif de support (2) comporte une structure formant des nervures.

3. Unité selon la revendication 1 ou 2, **caractérisée en ce que** le dispositif de support (2) forme un carter parallélépipédique.

4. Unité selon la revendication 1, 2 ou 3, **caractérisée en ce que** le dispositif de support (2) comporte une face d'appui plane.

5. Unité selon une ou plusieurs des revendications précédentes, **caractérisée en ce que** le dispositif de support (2) est moulé par injection en acrylonitrile-butadiène-styrène, ABS.

6. Unité selon une ou plusieurs des revendications précédentes, **caractérisée en ce que** le dispositif de support (2) comporte une zone (16) en forme de cuve, dans laquelle est intégré par moulage par injection un boîtier pour compteur (6), logé ainsi de manière imperdable.

7. Unité selon une ou plusieurs des revendications précédentes, **caractérisée en ce que** le dispositif de support (2) est ouvert sur sa face arrière opposée à la face visible ou face d'utilisation de la robinetterie sanitaire à encastrer et forme un volume exempt de matière, à l'exception des parois.

8. Unité selon la revendication 7, **caractérisée en ce que** la face arrière du dispositif de support (2) peut être fermée par un élément formant couvercle.

9. Unité selon la revendication 7 ou 8, **caractérisée en ce que** le volume exempt de matière est conçu sans contre-dépouille à partir de la face arrière dans le sens de la profondeur.

10. Unité selon la revendication 7, 8 ou 9, **caractérisée en ce qu'**un élément de remplissage (30) peut être posé à partir de la face arrière dans le volume exempt de matière et remplit, de préférence sensiblement, le logement exempt de matière.

11. Unité selon la revendication 10, **caractérisée en ce que** l'élément de remplissage (30) est réalisé en polystyrène expansé.

12. Unité selon la revendication 10 ou 11, **caractérisée en ce que** l'élément de remplissage (30) est assemblé de manière inamovible avec l'élément formant couvercle ou constitue en même temps l'élément formant couvercle.

13. Unité selon une ou plusieurs des revendications précédentes, **caractérisée en ce que** les éléments de fixation (20) sont intégrés dans le dispositif de support (2) en étant moulés par injection avec celui-ci.

14. Unité selon la revendication 13, **caractérisée en ce que** les éléments de fixation (20) sont formés par des boulons filetés (22) qui sont moulés par injection dans une zone (24) localement renforcée du dispositif de support (2).

15. Unité selon une ou plusieurs des revendications précédentes, **caractérisée en ce que** les éléments de fixation (20) sont disposés dans une zone d'angle du dispositif de support (2).

16. Unité selon une ou plusieurs des revendications précédentes, **caractérisée en ce que** les éléments de fixation (20) sont formés par un boulon fileté (22) coudé en forme de V, dont les branches s'avancent en saillie vers l'extérieur au-delà de deux petits côtés du dispositif de support (2).

17. Unité selon une ou plusieurs des revendications précédentes, **caractérisée en ce que** la robinetterie sanitaire à encastrer comporte un boîtier pour compteur (6) et un dispositif d'arrêt (8), lesquels sont assemblés l'un à l'autre d'un seul tenant.

18. Unité selon une ou plusieurs des revendications précédentes, **caractérisée en ce que** la robinetterie sanitaire à encastrer comporte un boîtier pour compteur (6) et un dispositif d'arrêt (8) et le dispositif de support (2) présente une dimension extérieure dans le sens d'écoulement de 180 mm maximum, en particulier 160 mm maximum et de préférence 150 mm maximum.

19. Unité selon une ou plusieurs des revendications précédentes, **caractérisée en ce que** le dispositif de support (2) présente une dimension extérieure dans le sens de la profondeur de 60 mm maximum, en particulier de 50 mm maximum.
